# EUROPÄISCHE PATENTSCHRIFT

(11) **EP 3 420 208 B1**
(45) Veröffentlichungstag und Bekanntmachung des Hinweises auf die Patenterteilung: **29.03.2023**
(21) Anmeldenummer: 17710665.5
(22) Anmeldetag: 22.02.2017
(51) Int. Cl.: F01N 3/28, F01N 5/02, F01N 1/08, F01N 1/10, F01N 1/12, F01N 1/24, F01N 1/06, F01N 13/02

(54) **VORRICHTUNG ZUM BEHANDELN EINES ABGASSTROMES**
DEVICE FOR TREATING AN EXHAUST GAS STREAM
DISPOSITIF DE TRAITEMENT D'UN FLUX DE GAZ D'ÉCHAPPEMENT

(30) Priorität: 26.02.2016 DE 102016002317
(43) Veröffentlichungstag der Anmeldung: 02.01.2019
(73) Patentinhaber: RMB / Energie GmbH, 26683 Saterland-Ramsloh (DE)
(72) Erfinder: BRAKE, Jens, 26817 Rhauderfehn (DE)
(74) Vertreter: Jabbusch, Matthias
(86) Internationale Anmeldenummer: PCT/EP2017/053968
(87) Internationale Veröffentlichungsnummer: WO 2017/144484

(56) Entgegenhaltungen:
- WO-A1-85/04217
- CN-Y- 2 786 288
- DE-A1- 2 904 700
- DE-A1- 3 039 742
- JP-A- 2001 164 932
- US-B1- 8 069 660

## Beschreibung

Die Erfindung geht von einer Vorrichtung zum Behandeln eines Abgasstromes mit einem Abgaskanal aus, wobei dem Abgaskanal wenigstens ein Schalldämpfer und wenigstens ein Wärmeübertrager zugeordnet sind, dem Abgaskanal wenigstens ein als Hohlstrang geformter Strömungsraum ausgebildet ist, der Schalldämpfer wenigstens einen an der inneren Mantelfläche des Hohlstranges ausgebildeten Dämpfungskern aufweist, und der Wärmeübertrager wenigstens einen an der äußeren Mantelfläche des Hohlstranges ausgebildeten Kühlwasserkanal aufweist.

Bekannte Vorrichtungen dieser Art dienen insbesondere der Behandlung von Abgasströmen aus Verbrennungsmotoren. Während der Schalldämpfer regelmäßig zur Lärmbekämpfung eingesetzt wird, dient der Wärmeübertrager der Nutzbarmachung der in den Verbrennungsgasen des Abgasstromes enthaltenen Verbrennungswärme. Die Kombination eines Schalldämpfers mit einem Wärmeübertrager ist jedoch konstruktiv problematisch, da der Raumbedarf der für einen leistungsstarken Wärmeübertrager erforderlichen Übertragerflächen im Konflikt mit dem Raumbedarf der für einen leistungsstarken Schalldämpfer erforderlichen Schallabsorptionsflächen steht. Folglich weisen die bekannten Vorrichtungen wenig überzeugende Leistungsparameter oder aber unvorteilhaft große bauliche Abmessungen auf.

Eine gattungsgemäße Vorrichtung mit verbesserten Leistungsparametern ist aus der deutschen Offenlegungsschrift DE 29 04 700 A1 bekannt. Ähnliche Vorrichtungen sind aus der deutschen Offenlegungsschrift DE 30 39 742 A1 und aus der chinesischen Druckschrift CN 2 786 288 Y bekannt.

Mit dem als Hohlstrang geformten Strömungsraum bietet der Abgaskanal die Möglichkeit zur Trennung seiner Peripherie in einen inneren und einen äußeren Bauraum. Diese über den Abgaskanal beabstandet zueinander gelegenen Bauräume sind für eine gemeinsame und gleichwohl konfliktfreie Anordnung des Schalldämpfers und des Wärmeübertragers unmittelbar am Abgaskanal besonders geeignet.

Der Erfindung liegt die Aufgabe zugrunde, eine Vorrichtung zum Behandeln eines Abgasstromes aufzuzeigen, deren Leistungsfähigkeit bei vorteilhaft kleinen Abmessungen maßgeblich erhöht ist.

Diese Aufgabe ist erfindungsgemäß durch die Merkmale des Patentanspruches 1 gelöst. Vorteilhafte Weiterbildungen der Erfindung sind in den Unteransprüchen angegeben.

Die erfindungsgemäße Vorrichtung zum Behandeln eines Abgasstromes zeichnet sich dadurch aus, dass zumindest der Strömungsraum des Abgaskanals wenigstens einen zwischen Drallblechen wendelförmig ausgebildeten Strömungsweg aufweist, und dass der Strömungsraum eine über die Länge seines Strömungsweges hinweg ausgebildete Reduktion seines Strömungsquerschnittes aufweist.

Die Wendelform führt zur Ausbildung turbulenter Strömungsverhältnisse und gewährleistet somit an den Wärmeübertragerflächen einen maximalen Wärmeübergang. Außerdem können mit den Drallblechen zusätzliche Wärmeübertragerflächen ausgebildet sein. Zur Verbesserung des Lärmschutzes weist der Abgaskanal wenigstens eine zwischen Prallplatten ausgebildete Interferenzkammer auf. Die Interferenzkammer hat ein im Wesentlichen destruktives Interferenzmuster, so dass Schallwellen einander gegenseitig auslöschen können. Dazu weisen die die Interferenzkammer ausbildenden Prallplatten verschiedene unregelmäßig angeordnete oder ausgebildete Lochungen auf, mit denen ein Auftreten von Resonanzschwingungen oder von ungestörten Schallreflektionen verhindert wird. Die Reduktion wirkt dem durch Abkühlung im Wärmeübertrager kleiner werdenden Volumenstrom vorzugsweise entgegen, so dass die Strömungsgeschwindigkeit über die gesamte Länge des Abgaskanals etwa konstant gehalten werden kann.

Der Strömungsraum weist vorzugsweise einen kreisringförmig ausgebildeten Strömungsquerschnitt auf. Andere, beispielsweise quadratringförmig ausgebildete Strömungsquerschnitte sind selbstverständlich ebenfalls für die erfindungsgemäße Vorrichtung geeignet. Auch kann der Strömungsraum mehrere Hohlräume zur parallelen Aufnahme mehrerer Dämpfungskerne aufweisen. Zur Ausbildung eines besonders dünnspaltigen Strömungsraumes bietet ein Hohlstrang bei vergrößerter Strangstärke vorteilhaft die Möglichkeit, seine innere Mantelfläche nur unwesentlich kleiner auszubilden, als seine äußere Mantelfläche. Die vergrößerte Strangstärke ermöglicht schließlich eine Ausbildung vorteilhaft großer Schallabsorptionsflächen zwischen Abgaskanal und Dämpfungskern einerseits sowie eine Ausbildung vorteilhaft großer Wärmeübergangsflächen zwischen Abgaskanal und Kühlwasserkanal andererseits. Während sich aus den vergrößerten Schallabsorptions- und Wärmeübergangsflächen eine Leistungssteigerung ergibt, sorgt die in ihrer Größe unveränderte Strömungsquerschnittsfläche des Abgaskanals für maximal kleine bauliche Abmessungen.

Nach einer ersten Weiterbildung der Erfindung ist auch mit dem Kühlwasserkanal wenigstens ein als Hohlstrang geformter Strömungsraum ausgebildet. Dieser Strömungsraum weist vorzugsweise einen an den Strömungsquerschnitt des Abgaskanals angepassten Strömungsquerschnitt, vorzugsweise jedoch einen kreisringförmig ausgebildeten Strömungsquerschnitt auf.

Außerdem ist vorgesehen, den Schallschutz dadurch zu verbessern, dass dem Abgaskanal wenigstens eine in seinem Abgaseinlass angeordnete Diffusionsplatte zugeordnet ist. Mit dieser Platte erfolgt vorzugsweise eine Vergleichmäßigung eines von den Taktzyklen eines Verbrennungsmotors geprägten Abgasstromes. Dazu bildet die Diffusionsplatte einen gleichmäßig über die Strömungsquerschnittsfläche wirkenden Strömungswiderstand, beispielsweise mit Hilfe einer Lochstruktur, aus.

Nach einer besonders vorteilhaften Weiterbildung der Erfindung ist dem Abgaskanal wenigstens ein Katalysator zur Verminderung der Schadstoffemissionen in einem den Abgaskanal verlassenden Verbrennungsgas zugeordnet. Zur baulichen Integration eines solchen Katalysators wird vorgeschlagen, diesen im Dämpfungskern des Schalldämpfers auszubilden. Dazu bedarf es einer Umlenkung des Abgasstromes an wenigstens einem Ende des Abgaskanals. Vorzugsweise ist der Katalysator sogar zum Dämpfungskern ausgebildet. Dazu weist das für die Ausbildung des Dämpfungskerns verwendete Material sowohl schalldämpfende als auch katalytische Eigenschaften auf.

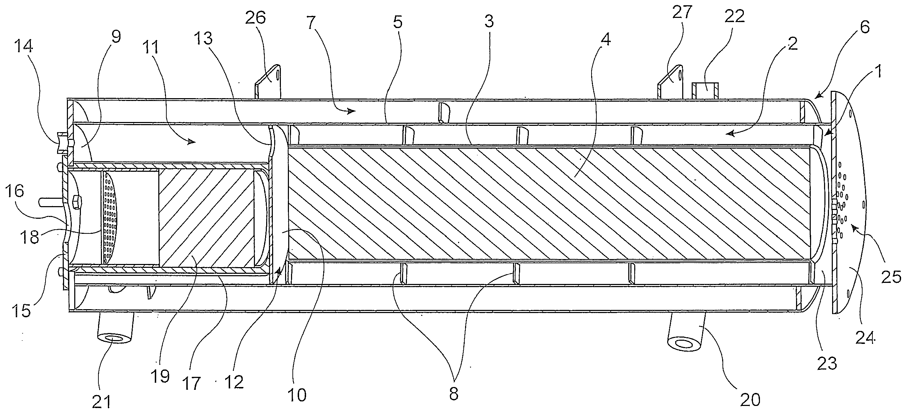

Ein Ausführungsbeispiel der Erfindung, aus dem sich weitere erfinderische Merkmale ergeben, ist in der Zeichnung dargestellt.

Die einzige Figur zeigt eine perspektivische Darstellung einer erfindungsgemäßen Vorrichtung zum Behandeln eines Abgasstromes im Mittelschnitt. Die Vorrichtung hat einen Abgaskanal 1, dem ein Schalldämpfer und Wärmeübertrager zugeordnet sind. Mit dem Abgaskanal 1 ist ein als Hohlstrang geformter Strömungsraum 2 ausgebildet. Während der Schalldämpfer einen an der inneren Mantelfläche 3 des Hohlstranges ausgebildeten Dämpfungskern 4 aufweist, hat der Wärmeübertrager einen an der äußeren Mantelfläche 5 des Hohlstranges ausgebildeten Kühlwasserkanal 6. Der Kühlwasserkanal 6 hat hingegen einen als Hohlstrang geformten Strömungsraum 7. Im Strömungsraum 2 des Abgaskanals 1 ist ein zwischen Drallblechen 8 wendelförmig verlaufender Strömungsweg ausgebildet. Außerdem weist der Abgaskanal 1 eine zwischen Prallplatten 9, 10 ausgebildete Interferenzkammer 11 auf. Die Prallplatte 10 weist eine von der Interferenzkammer 11 in eine Eintrittsverteilungskammer 12 führende Durchlassöffnung 13 auf. Die Prallplatte 9 weist einen Sensoranschluss 14 sowie einen Anschlussflansch 15 mit einer Abgaseinlassöffnung 16 auf. Ein dem Abgaskanal 1 zugeordneter Katalysator 17 ist in der Interferenzkammer 11 gelegen und weist eine an der Abgaseinlassöffnung 16 angeordnete Diffusionsplatte 18 sowie einen hinter der Diffusionsplatte 18 gelegenen Katalysatorkern 19 auf. Der Kühlwasserkanal 6 weist einen Kühlwassereintrittsstutzen 20, einen Kühlwasseraustrittsstutzen 21 sowie einen Entlüftungsstutzen 22 auf. Eine dem kreisringsfömigen Strömungsraum 2 des Abgaskanals 1 austrittsseitig vorgelagerte Austrittsverteilungskammer 23 ist mit einem Prallblech 24 verschlossen, welches eine als Abgasauslass fungierende Lochstruktur 25 aufweist. Am Kühlwasserkanal 6 ausgebildete Haltelaschen 26, 27 dienen der Aufhängung der erfindungsgemäßen Vorrichtung im nicht dargestellten Abgasstrang eines Verbrennungsmotors.

## Patentansprüche

1. Vorrichtung zum Behandeln eines Abgasstromes mit einem Abgaskanal (1), dem wenigstens ein Schalldämpfer und wenigstens ein Wärmeübertrager zugeordnet sind, wobei mit dem Abgaskanal wenigstens ein als Hohlstrang geformter Strömungsraum (2) ausgebildet ist, der Schalldämpfer wenigstens einen an der inneren Mantelfläche (3) des Hohlstranges ausgebildeten Dämpfungskern (4) aufweist, und der Wärmeübertrager wenigstens einen an der äußeren Mantelfläche (5) des Hohlstranges ausgebildeten Kühlwasserkanal (6) aufweist,
**dadurch gekennzeichnet,**
**dass** zumindest im Strömungsraum (2) des Abgaskanals (1) wenigstens ein zwischen Drallblechen (8) wendelförmig verlaufender Strömungsweg ausgebildet ist, und
**dass** der Strömungsraum (2) des Abgaskanals (1) eine über die Länge seines Strömungsweges hinweg ausgebildete Reduktion seines Strömungsquerschnittes aufweist.

2. Vorrichtung nach Anspruch 1, **dadurch gekennzeichnet, dass** mit dem Kühlwasserkanal (6) wenigstens ein als Hohlstrang geformter Strömungsraum (7) ausgebildet ist.

3. Vorrichtung nach einem der Ansprüche 1 bis 2, **dadurch gekennzeichnet, dass** der Abgaskanal (1) wenigstens eine zwischen Prallplatten (9, 10) ausgebildete Interferenzkammer (11) aufweist.

4. Vorrichtung nach einem der Ansprüche 1 bis 3, **dadurch gekennzeichnet, dass** dem Abgaskanal (1) wenigstens eine in seinem Abgaseinlass angeordnete Diffusionsplatte (18) zugeordnet ist.

5. Vorrichtung nach einem der Ansprüche 1 bis 4, **dadurch gekennzeichnet, dass** dem Abgaskanal (1) wenigstens ein Katalysator (17) zugeordnet ist.

6. Vorrichtung nach Anspruch 5, **dadurch gekennzeichnet, dass** der Katalysator (17) wenigstens einen im Dämpfungskern (4) des Schalldämpfers ausgebildeten Katalysatorkern (19) aufweist.

## Claims

1. Device for treating an exhaust-gas stream with an exhaust-gas channel (1), to which at least one silencer and at least one heat exchanger are assigned, wherein, with the exhaust-gas channel, at least a hollow-beam-shaped flow chamber (2) is formed; the silencer comprises at least one attenuation core (4) formed on the inner shell surface (3) of the hollow beam, and the heat exchanger comprises at least one cooling-water channel (6) formed on the outer shell surface (5) of the hollow beam,
**characterized in that**
at least one flow path running spirally between baffle plates (8) is formed at least in the flow chamber (2) of the exhaust-gas channel (1), and that the flow space (2) of the exhaust-gas channel (1) comprises a reduction of its flow cross-section formed across the length of its flow path.

2. Device according to claim 1, **characterized in that**, with the cooling-water channel (6), at least one formed as a hollow-beam flow space (7) is formed.

3. Device according to any one of the Claims 1 to 2, **characterized in that** the exhaust-gas channel (1) comprises at least one interference chamber (11) formed between baffle plates (9, 10).

4. Device according to any one of the Claims 1 to 3, **characterized in that** at least one diffusion plate (18) arranged in its exhaust-gas inlet is assigned to the exhaust-gas channel (1).

5. Device according to any one of the Claims 1 to 4, **characterized in that** at least one catalytic converter (17) is assigned to the exhaust-gas channel (1).

6. Device according to Claim 5, **characterized in that** the catalytic converter (17) comprises at least one catalytic-converter core (19) formed in the attenuation core (4) of the silencer.

## Revendications

1. Dispositif de traitement d'un flux de gaz d'échappement avec un conduit de gaz d'échappement (1), auquel sont attribués
au moins un silencieux et au moins un échangeur de chaleur, sachant qu'au moins un espace d'écoulement (2) formé sous la forme d'un tronçon creux est constitué avec le conduit de gaz d'échappement, le silencieux comporte au moins un noyau d'amortissement (4) constitué sur l'enveloppe intérieure (3) du tronçon creux et l'échangeur de chaleur comporte au moins un conduit d'eau de refroidissement (6) constitué sur l'enveloppe extérieure (5) du tronçon creux,
**caractérisé en ce qu'**
au moins dans l'espace d'écoulement (2) du conduit de gaz d'échappement (1) est constituée au moins une voie d'écoulement passant en forme hélicoïdale entre les aubes tourbillonnaires (8) et
**en ce que** l'espace d'écoulement (2) du conduit de gaz d'échappement (1) comporte une réduction de sa section d'écoulement constituée à travers la longueur de sa voie d'écoulement.

2. Dispositif selon la revendication 1, **caractérisé en ce qu'**au moins un espace d'écoulement (7) formé sous la forme d'un tronçon creux est constitué avec le conduit d'eau de refroidissement (6).

3. Dispositif selon l'une quelconque des revendications 1 à 2, **caractérisé en ce que** le conduit de gaz d'échappement (1) comporte moins une chambre d'interférence (11) constituée entre les déflecteurs (9, 10).

4. Dispositif selon l'une quelconque des revendications 1 à 3, **caractérisé en ce qu'**au moins une plaque de diffusion (18) disposée dans son entrée de gaz d'échappement est attribué au conduit de gaz d'échappement (1).

5. Dispositif selon l'une quelconque des revendications 1 à 4, **caractérisé en ce qu'**au moins un catalyseur (17) est attribué au conduit de gaz d'échappement (1).

6. Dispositif selon la revendication 5, **caractérisé en ce que** le catalyseur (17) comporte au moins un noyau de catalyseur (19) constitué dans le noyau d'amortissement (4) du silencieux.
